# EUROPEAN PATENT APPLICATION

(11) **EP 1 191 677 A1**
(43) Date of publication of application: **27.03.2002**
(21) Application number: 00117393.9
(22) Date of filing: 24.08.2000
(51) Int. Cl.: H02P 6/16

(54) **Brushless direct current motor having supervised rotor position feedback**

(71) Applicant: MTS SYSTEMS CORPORATION, Eden Prairie, MN 55344-2290 (US)
(72) Inventor: Yost, Donald A., Lansdale, PA 19446 (US)
(74) Representative: VOSSIUS & PARTNER

(57) **Abstract**

A method and apparatus for commutating a brushless direct current motor (10) having a set of stator windings (14) and a rotor (16) movable relative to the set of stator windings includes sensing a position of the rotor relative to the set of stator windings with a position sensor and providing a sensor signal indicative of the position. The position signal is monitored with a commutation state machine (40) and/or a hysteresis generator The stator windings are commutated as a function of the commutation state machine and/or the hysteresis generator and a position of the rotor.

## Description

The present invention relates to commutated, brushless direct current motors. More particularly, the present invention relates to a controller used to commutate a brushless direct current motor as a function of rotor position.

Brushless direct current motors with electronically commutated stator windings and permanent magnets mounted to the rotor are currently a subject of much interest. These motors provide a means of meeting the increasing demand for controllable, high-speed, low-maintenance motors for an ever increasing range of power ratings. Generally, the motor includes a position sensor providing digital position information of the moving rotor. Typical sensors include hall effect switches, an encoder, or a resolver coupled to digital conversion circuitry.

The positional information is commonly used as a pointer in a commutation truth table stored in memory such as read-only-memory (ROM). The commutation truth table indicates which switches of an inverter should be operated as a function of rotor position. Thus, the position of the rotor must be known by the controller at all times so as to properly excite the appropriate winding in order to sustain desired motor torque.

In order to properly commutate the motor, the position feedback is used immediately to access the commutation truth table and determine which of the inverter switches should be activated. If the positional information is incorrect, for example, due to electrical noise in noisy environments, inappropriate commutation can occur. Inappropriate commutation can cause large, destructive currents to flow in the motor and/or the controller.

Filters with suitable time constants have been used with limited success to filter the positional information. However, simply increasing the time constant has the adverse effect of compromising high speed motor performance by delaying the positional information.

Another problem is particularly associated with positional information obtained from a resolver. In the past when hall effect sensors were used to obtain positional information, there was some hysteresis present in the positional information. The hysteresis would cause the motor to commutate in a slightly different position, depending on whether the motor was moving one way or the other. In this manner, if the motor stopped in a given position and motor torque was to be maintained, the motor would not tend to dither between two commutation states and contribute noise into the system (motor and connected load).

Many motors however now use a fine resolution resolver to provide positional information. The output signal from the resolver is analog and typically is converted to digital form using a resolver-to-digital converter. The lowest order bit or bits may be active or changing even if the motor is stopped due to conversion uncertainty. If the motor is stopped at a position at which this uncertainty would cause a transition to the next commutation state, the motor may be subject to perturbations as the excitation state toggles (dithers) in between the two adjacent states. This situation can degrade system performance in some critical applications.

An improved motor controller that addresses one or both of these problems is therefore desired.

A method and apparatus of the invention for commutating a brushless direct current motor having a set of stator windings and a rotor movable relative to the set of stator windings includes sensing a position of the rotor relative to the set of stator windings with a position sensor and providing a sensor signal indicative of the position. The position signal is monitored with a commutation state machine and/or a hysteresis generator. The stator windings are commutated as a function of the commutation state machine and/or the hysteresis generator and a position of the rotor. Illustrative embodiments of the invention will be described in detail in connection with the drawings, in which:
FIG. 1 is a schematic representation of a brushless direct current motor having a commutation state machine.
FIG. 2 is a pictorial representation of the commutation state machine.
FIG. 3 is a schematic representation of a brushless direct current motor having a hysteresis generator.
FIG. 4 is a schematic representation of a brushless direct current motor having the commutation state machine and the hysteresis generator.

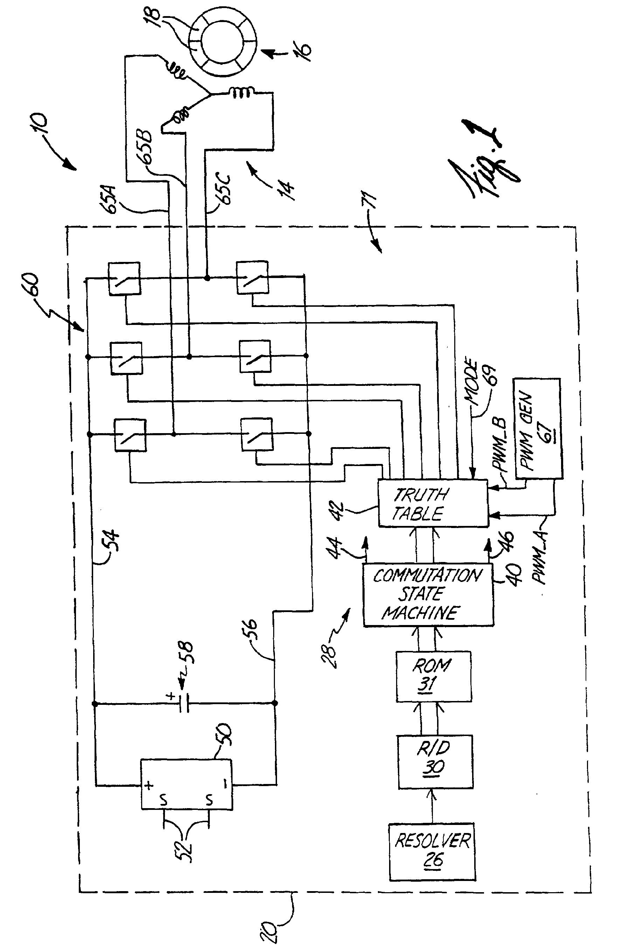

FIG. 1 schematically illustrates components of a brushless motor 10. Generally, the motor 10 includes stationary stator windings 14 mounted in a suitable frame, not shown. Although illustrated wherein the stator windings 14 are connected in a wye configuration, those skilled in the art will appreciate that a delta configuration can also be used. A rotor, schematically illustrated at 16, is also mounted to the frame for rotation about a central axis. The rotor 16 typically includes a number of permanent magnets 18 secured thereto.

A motor drive 20 provides commutated current waveforms to the set of stator windings 14. As is well known in the art, a position sensor 26 is operably coupled to the rotor 16 to sense the position thereof and provide positional information to a motor controller 28. In the embodiment illustrated, the position sensor 26 comprises a resolver that provides as an output analog positional information. A resolver-to-digital converter 30 receives the analog signals from the resolver 26 and converts the signals to a binary format suitable for the motor controller 28. Although not necessary, in many instances a conversion device 31 such as a ROM table converts the binary format to a six step code ("Gray Code"). Of course, other conversions can also be implemented such as binary-to-twelve step, if desired.

Broadly, an aspect of the present invention includes a method and apparatus for commutating the brushless direct current motor 10. The method and apparatus includes sensing a position of the rotor 16 relative to the set of stator windings 14 with the position sensor 26 and providing a sensor signal indicative of the position of the rotor 16. The position signal is monitored with at least one of a supervisory device, discussed below, to ascertain if a condition has been met. The supervisory device provides an output indicative of whether the condition has been met. The stator windings 14 are commutated as a function of the output and a position of the rotor 16.

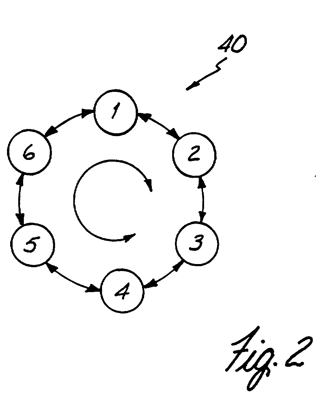

In one embodiment, the supervisory device comprises a commutation state machine 40 that receives the signal indicative of the position sensor 26 (as shown, through the resolver-to-digital converter 30 and ROM table 31) and provides an input to a commutation truth table 42. The commutation state machine 40 prevents erroneous positional information from reaching the commutation truth table 42. Upon detecting a change in position of the rotor 16, the commutation state machine 40 determines, based on its present state, whether the detected next state is valid by comparing the next state to the only two valid next states that have been encoded logically in the commutation state machine 40. For example, a typical brushless motor has six states, which can be simply labeled "1", "2", "3", "4", "5" and "6". The only valid sequence through these states is "1-2-3-4-5-6-1 ...", corresponding to forward rotation, or "6-5-4-3-2-1-6 ...", corresponding to reverse rotation. Fig. 2 is a pictorial representation of commutation state machine 40 and the traversal between states. Note that the only valid next states are adjacent states in the commutation state machine 40. If the received next state is valid, the received state becomes the present state, and is passed on to the commutation truth table 42. If the received next state is invalid, the present state is not changed. If desired, an error signal 44 can be generated if the received next state is invalid. The commutation state machine 40 thus supervises the positional information and ensures that the proper sequence is used by the commutation truth table 42. In a first mode of operation, the commutation state machine 40 can provide the proper sequence to the commutation truth table 42. In another mode of operation, the commutation state machine 40 can provide an indication that the current value of the position signal (received by the commutation truth table 42 along a different path) is valid or invalid. If desired, the commutation state machine 42 can provide, as an output signal 46, the direction of rotor movement.

The remaining components illustrated in the motor drive 20 are conventional. A rectifier 50 receives a suitable alternating current input signal on signal lines 52 to produce a fixed positive and negative DC voltages on a positive bus 54 and a negative bus 56, respectively. A capacitor 58 is provided to maintain the positive bus 54 and the negative bus 56 within suitable limits. A three-phase inverter 60 is connected to the positive bus 54 and the negative bus 56 in a conventional manner to provide three-phase commutated current waveforms on power signal lines 65A, 65B and 65C, which are connected to the set of stator windings 14. The inverter 60 comprises a power transistor bridge for switching each of the signal lines 65A-65C from an open circuit condition to the positive bus 54 or the negative bus 56. The duty cycle of each transistor bridge is controlled by the commutation truth table 42 in conjunction with information from a pulse width modulation (PWM) generator 67. U.S. Patent 5,519,601, incorporated herein in its entirety, describes a suitable dual pulse width modulation control technique (PWM_A, PWM_B), although a single pulse width modulation control technique (PWM_A) can also be used. U.S. Patent 5,081,409, also incorporated herein in its entirety, describes a suitable circuit to obtain the signal PWM_A. A mode select 69 can be used to select a single or dual mode as desired. As used herein, the truth table 42, the inverter 60 and the pulse width generator 67, or equivalents thereto, comprise a commutator 71 that receives the output from the commutation state machine 40 (which is a function of the commutation state machine 40 and the position signal) and commutates the stator windings 14.

The motor drive 20 illustrated in FIG. 1 is but one exemplary drive that can benefit from use of the commutation state machine 40. Other brushless motor drives, including linear motor drives rather than the rotating motor 10 herein illustrated can also use the commutation state machine 40. It should be understood that the resolver 26 is but one embodiment for sensing the position of the rotor 16. Any suitable sensor such as an encoder or hall effect sensors could also be used in this broad aspect of the invention.

The commutation state machine 40 can be implemented in hardware using conventional logic components, or in software. Commonly, motor controllers 28 comprise digital signal processors (DSP) that receive inputs such as the rotor positional information, command signals and indications of current flowing in the stator windings 14. In such cases, the DSP further stores, or has access to the commutation truth table 42 or information equivalent thereto stored in memory. Those skilled in the art can easily implement the commutation state machine 40 using a program module or routine executed by the DSP.

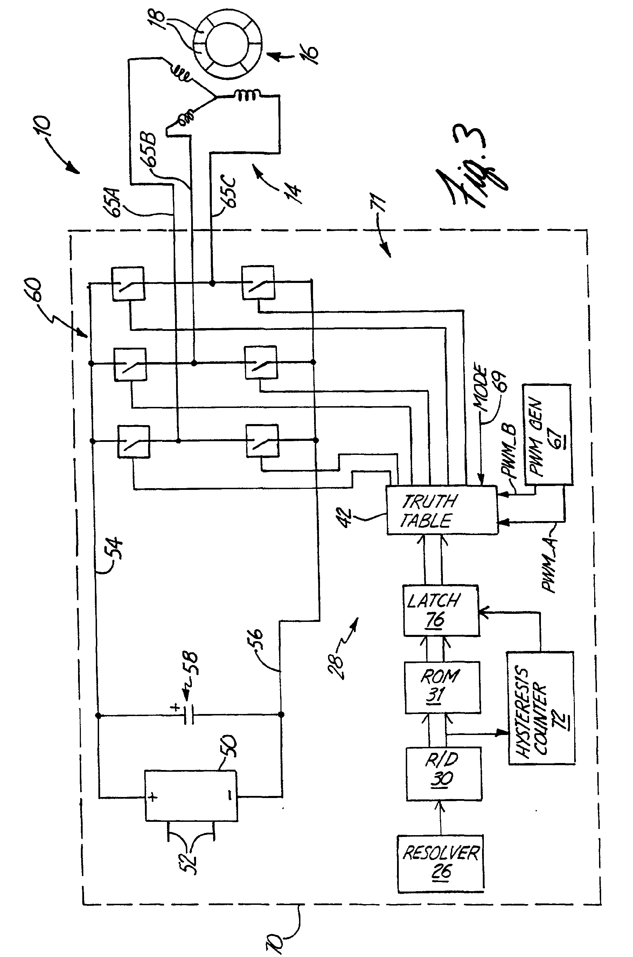

In a another embodiment, the supervisory device comprises a hysteresis generator 72 that receives a signal indicative of the output from the resolver-to-digital converter 30 and provides synthesized hysteresis. Referring to FIG. 3 where similar reference numbers have been used to identify similar components of the motor drive 20 of FIG. 1, a motor drive 70 includes the hysteresis generator 72 (herein embodied as a counting device) that receives the lower order bit or bits and begins counting once a new commutation state has been entered. However, before the next commutation state is declared (passed on to the commutation truth table 42), the hysteresis generator 72 must advance a selected number of counts into the next commutation state, indicating advancement of the rotor 16 a selected extent. When the selected number or count has been reached, the new state is clocked out to the commutation truth table 42. In the exemplary embodiment, a latch 76 holds the current state of the count until a command signal from the hysteresis generator 72 is received indicating that the state should be released. In other words, the latch 76 locks the positional information from the resolver-to-digital converter 30 in a certain position until the hysteresis deadband has been satisfied. The selected count can be adjustable per motor application and corresponds to the precise amount of positional hysteresis required.

It should be noted that the hysteresis generator 72 and the latch 76 do not merely delay propagation of the positional information to the truth table 42 as the motor operates, but rather provides a synthesized hysteresis output indicative of advancement of the rotor a selected distance after a new commutation state has been entered. The synthesized hysteresis output comprises a delay in propagation of the output at stop and near-stop conditions of the motor, for instance, when the motor is changing directions or during stop-start operation. In this manner, the hysteresis generator 72 of this aspect of the invention confirms any change in direction of the motor.

In one embodiment, the hysteresis generator 72 further calculates the speed of the motor, or includes an input to effectively disable the synthesized hysteresis, when a selected speed has been obtained. This feature prevents degradation of high-speed performance of the motor due to the minor delay imposed by the hysteresis generator 72 at very low speeds. The commutator 71 receives the output from the latch 76 (which is a function of the hysteresis generator 72 and the position signal) and commutates the stator windings 14 accordingly.

Like the commutation state machine 40 discussed above, the hysteresis generator 72 and latch 76 can be implemented in hardware, software, or a combination thereof. If the motor controller 28 comprises a DSP, a program module or routine can execute the functions of the hysteresis generator 72 and latch 76. For instance, threshold values indicative of the desired rotation of the rotor can be stored or accessed by the digital signal processor and used to generate the synthesized hysteresis when the values have been reached or exceeded.

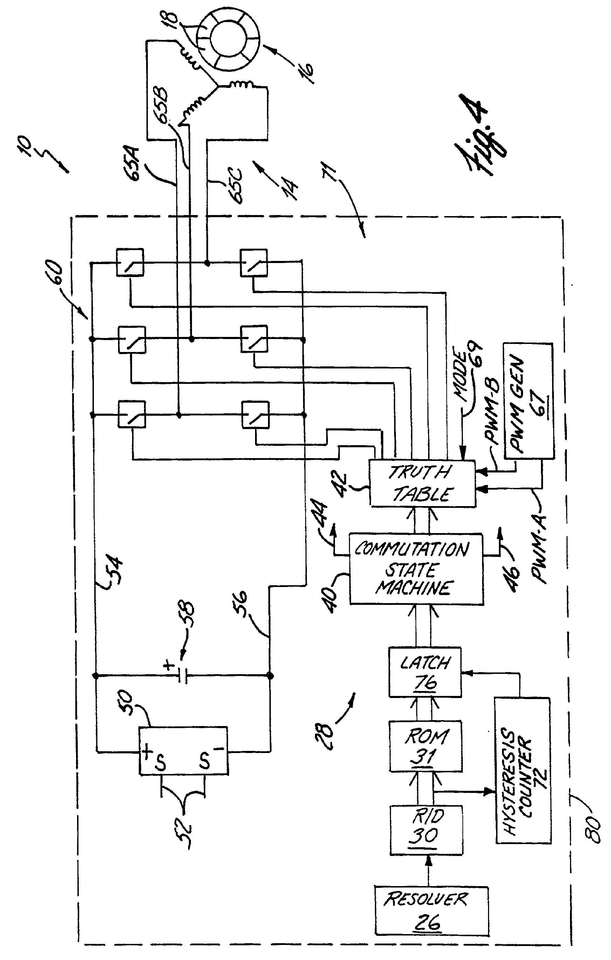

It should be understood that although the commutation state machine 40 and hysteresis generator 72 were described and illustrated separately in FIGS 1 and 3, a motor drive having both features can also be implemented. FIG. 4 is an exemplary embodiment illustrating a motor drive 80 implementing both the commutation state machine 40 and the hysteresis generator 72.

Although the present invention has been described with reference to preferred embodiments, workers skilled in the art will recognize that changes may be made in form and detail without departing from the spirit and scope of the invention.

## Claims

1. A motor drive for a brushless direct current motor having a set of stator windings and a rotor movable relative to the set of stator windings, the motor drive comprising:
a position sensor providing a position signal indicative of a position of the rotor relative to the set of stator windings;
a commutation state machine receiving the position signal and providing an output indicative of a valid next position of the rotor in a known sequence of positions; and
a commutator receiving the output and coupleable to the stator windings to commutate the stator windings as a function of the output and a position of the rotor.

2. The motor drive of claim 1 and further comprising a digital signal processor, and wherein the commutation state machine comprises a routine executable by the digital signal processor.

3. The motor drive of claim 1 or 2, wherein the commutation state machine is capable of providing an indication of direction of movement of the rotor.

4. The motor drive of any of claims 1 to 3 and further comprising:
a hysteresis generator receiving the position signal and providing synthesized hysteresis output indicative of advancement of the rotor a selected distance.

5. A motor drive for a brushless direct current motor having a set of stator windings and a rotor movable relative to the set of stator windings, the motor drive comprising:
a position sensor providing a position signal indicative of a position of the rotor relative to the set of stator windings;
a hysteresis generator receiving the position signal and providing synthesized hysteresis output indicative of advancement of the rotor a selected distance; and
a commutator receiving the output and coupleable to the stator windings to commutate the stator windings as a function of the output and a position of the rotor.

6. The motor drive of claim 4 or 5, wherein the extent of advancement is adjustable.

7. The motor drive of any of claims 4 to 6, wherein the hysteresis generator includes a speed detector, the speed detector disabling the output at a selected speed of the rotor.

8. The motor drive of any of claims 4 to 7, wherein the hysteresis generator comprises a counting device.

9. The motor drive of any of claims 4 to 8 and further comprising a digital signal processor, and wherein the hysteresis generator comprises a routine executable by the digital signal processor.

10. A method of commutating a brushless direct current motor having a set of stator windings and a rotor movable relative to the set of stator windings, the method comprising:
sensing a position of the rotor relative to the set of stator windings and providing a sensor signal indicative of the position;
monitoring the position signal to ascertain if the rotor is at a valid next position in a known sequence of positions and providing an output indicative thereof; and
commutating the stator windings as a function of the output and a position of the rotor.

11. The method of claim 10 and further comprising indicating a direction of movement of the rotor.

12. The method of claim 10 or 11, wherein the position signal comprises a digital position signal.

13. The method of any of claims 10 to 12 and further comprising detecting an extent of advancement of the rotor a selected distance and providing an output indicative thereof.

14. A method of commutating a brushless direct current motor having a set of stator windings and a rotor movable relative to the set of stator windings, the method comprising:
sensing a position of the rotor relative to the set of stator windings and providing a sensor signal indicative of the position;
monitoring the position signal to detect an extent of advancement of the rotor a selected distance and providing an output indicative thereof; and
commutating the stator windings as a function of the output and a position of the rotor.

15. The method of claims 13 or 14, wherein the extent of advancement is adjustable.
